(19) **Europäisches Patentamt / European Patent Office / Office européen des brevets**

(11) **EP 4 578 619 A1**

(12) **EUROPEAN PATENT APPLICATION**
published in accordance with Art. 153(4) EPC

(43) Date of publication:
**02.07.2025 Bulletin 2025/27**

(21) Application number: **23857426.3**

(22) Date of filing: **24.08.2023**

(51) International Patent Classification (IPC):
*B29C 43/14* (2006.01)    *B29C 43/20* (2006.01)
*B29C 70/06* (2006.01)    *B29C 70/34* (2006.01)
*B29C 70/42* (2006.01)    *B32B 3/12* (2006.01)
*B32B 37/02* (2006.01)    *B32B 37/18* (2006.01)

(52) Cooperative Patent Classification (CPC):
**B29C 43/14; B29C 43/20; B29C 70/06;
B29C 70/34; B29C 70/42; B32B 3/12; B32B 37/02;
B32B 37/18**

(86) International application number:
**PCT/JP2023/030582**

(87) International publication number:
**WO 2024/043318 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.08.2022 JP 2022133293
24.04.2023 JP 2023070926**

(71) Applicant: **Mitsubishi Chemical Corporation
Tokyo 100-8251 (JP)**

(72) Inventors:
• **KUBOWAKI Masayuki
Sayama-shi, Saitama 350-1325 (JP)**
• **SASA Yoshinori
Tokyo 100-8251 (JP)**
• **HAMAMOTO Hiroki
Tokyo 100-8251 (JP)**

(74) Representative: **Hoffmann Eitle
Patent- und Rechtsanwälte PartmbB
Arabellastraße 30
81925 München (DE)**

(54) **METHOD FOR MANUFACTURING HONEYCOMB SANDWICH STRUCTURE AND SAID STRUCTURE**

(57)    A novel manufacturing method for a honeycomb sandwich structural body is provided in which a honeycomb core is sandwiched between CFRP layers. The manufacturing method for a honeycomb sandwich structural body includes: (i) charging a metal mold for primary molding with a honeycomb core and at least two first prepregs; (ii) pressurizing and heating the charged metal mold for primary molding by a press machine to obtain a primary molded product having a honeycomb sandwich structure in which the honeycomb core is sandwiched between two first CFRP layers; (iii) charging a metal mold for secondary molding with the primary molded product and at least two second prepregs; and (iv) pressurizing and heating the charged metal mold for secondary molding by the press machine to obtain a secondary molded product having a honeycomb sandwich structure in which the honeycomb core is sandwiched between the two first CFRP layers and a second CFRP layer is laminated on each of the two first CFRP layers.

FIG. 5

EP 4 578 619 A1

**Description**

TECHNICAL FIELD

The present invention relates to a manufacturing method for a honeycomb sandwich structural body and the structural body.

Priorities are claimed on Japanese Patent Application No. 2022-133293 filed August 24, 2022, and Japanese Patent Application No. 2023-070926 filed April 24, 2023, the contents of which are incorporated herein by reference.

BACKGROUND ART

In recent years, unmanned aerial vehicles have been required to fly at higher altitudes, that is, to be able to fly in spaces with a lower air density. One way to achieve the above is to generate larger lift by rotating wings at a higher speed, and for this, it is necessary to increase the rigidity of the wings.

In a case where the wings are rotated at a high speed, noise increases. Therefore, in order to avoid the above problem and achieve the above-described object, it is also considered to increase the thicknesses of the wings to enhance the lift per revolution. However, in a case where the weight is increased with the increased wing thickness, the lift improvement effect is offset. Therefore, it is required to increase the thicknesses of the wings without greatly increasing the weight.

In order to meet the above-described demand, a wing having a honeycomb sandwich structure in which a honeycomb core is sandwiched between carbon fiber-reinforced plastics (CFRP) layers has been proposed (Patent Document 1).

Citation List

Patent Document

Patent Document 1: Japanese Unexamined Patent Application, First Publication No. 2021-112849

SUMMARY OF INVENTION

Technical Problem

Patent Document 1 discloses a method for manufacturing a laminate, including a first step of pressing a punch die from a direction intersecting an opening surface of a cell of a honeycomb material to manufacture a honeycomb structural body subjected to the punching, and a second step of laminating a first skin layer before curing or solidification and a second skin layer before curing or solidification on the honeycomb structural body obtained by subjecting a honeycomb core to the punching to cure or solidify the first skin layer before curing or solidification and the second skin layer before curing or solidification.

In this method, the first skin layer and the second skin layer are laminated on the honeycomb structural body obtained in advance, and thus depending on the shape of the honeycomb structural body, wrinkles may be generated during lamination of the first skin layer and the second skin layer, or the surface of the laminate may not be uniformly pressurized.

In addition, Patent Document 1 discloses a method for manufacturing a laminate, in which cured or solidified third and fourth skin layers and a honeycomb core subjected to punching are prepared in advance, and the honeycomb core, a prepreg, the third skin layer, and the fourth skin layer are charged into a metal mold, and compressed and heated to obtain a honeycomb sandwich structural body.

In this method, as the third skin layer and the fourth skin layer, layers having few surface voids are obtained, but voids generated from the prepreg cannot pass through the third skin layer or the fourth skin layer between the third skin layer or the fourth skin layer and the prepreg, so that voids are likely to accumulate.

In addition, when the shape of the metal mold for a honeycomb sandwich structure manufacturing step does not match the shapes of the third skin layer and the fourth skin layer due to contraction or the like during the curing or solidification of the third skin layer and the fourth skin layer, there is a concern that thickness unevenness may occur in the first skin layer and the second skin layer.

Furthermore, there are four separate steps: a third skin layer manufacturing step; a fourth skin layer manufacturing step; a honeycomb core punching step; and a honeycomb sandwich structure manufacturing step, which take time and effort, resulting in low productivity and high production costs.

An object of the present invention is to provide a novel manufacturing method for a honeycomb sandwich structural body in which a honeycomb core is sandwiched between CFRP layers.

Another object of the present invention is to provide a honeycomb sandwich structural body having excellent rigidity.

A further object of the present invention is to provide a honeycomb sandwich structural body having a good appearance.

Solution to Problem

One aspect of the present invention is a manufacturing method for a honeycomb sandwich structural body, the method comprising: (i) charging a metal mold for primary molding with a honeycomb core and at least two first prepregs; (ii) pressurizing and heating the charged metal mold for primary molding by a press machine to obtain a primary molded product having a honeycomb sandwich structure in which the honeycomb core is sandwiched between two first CFRP layers; (iii) charging a metal mold for secondary molding with the primary molded product and at least two second prepregs; and (iv) pressurizing and heating the charged metal mold for secondary molding by the press machine to obtain a secondary molded product having a honeycomb sandwich structure in which the honeycomb core is sandwiched between the two first CFRP layers and a second CFRP layer is laminated on each of the two first CFRP layers.

Another aspect of the present invention is a honeycomb sandwich structural body, comprising: a honeycomb core sandwiched between CFRP layers, wherein a value A is 0.01 or more and 0.10 or less, which is obtained by the following measurement method:

(Measurement Method for Value A)

an image of a cross section of a thickest part of the honeycomb sandwich structural body, cut in parallel with a thickness direction of the honeycomb core, is captured; using image-processing software ImageJ, in a range of 20 mm in a direction perpendicular to the thickness direction of the honeycomb core in the image of the cross section, coordinates of an outer surface of the honeycomb sandwich structural body and coordinates of an innermost surface of the CFRP layer are acquired for each pixel; and for each point of the coordinates of the outer surface, a distance between the coordinates of the outer surface and the coordinates of the innermost surface positioned in a normal direction to the outer surface at the coordinates of the outer surface is measured, and a standard deviation $D_A$ of the distances and an average value $D_B$ of the distances are calculated to obtain the value A using Expression (1),

$$A = D_A/D_B \text{ ... Expression (1).}$$

As described above, in the measurement of the value A, the measurement is performed in the thickest part of the honeycomb sandwich structural body. Even when the value A is outside the above-described range in a part other than the thickest part, in a case where the value A satisfies the above-described range in the thickest part, it can be considered to correspond to this aspect.

A further aspect of the present invention is the honeycomb sandwich structural body, wherein a UD layer is disposed closer to an outer surface side of the honeycomb sandwich structural body than the woven fabric layer, and a value B is 0.01 or more and 0.10 or less, which is obtained by the following measurement method:

(Measurement Method for Value B)

an image of a cross section of a thickest part of the honeycomb sandwich structural body, cut in parallel with a thickness direction of the honeycomb core, is captured; using image-processing software ImageJ, in a range of 20 mm in a direction perpendicular to the thickness direction of the honeycomb core in the image of the cross section, coordinates of an outer surface of the honeycomb sandwich structural body and coordinates of an interface between the woven fabric layer and the UD layer are acquired for each pixel; and for each point of the coordinates of the outer surface, a distance between the coordinates of the outer surface and the coordinates of the interface positioned in a normal direction to the outer surface at the coordinates of the outer surface is measured, and a standard deviation $D_C$ of the distances and an average value $D_D$ of the distances are calculated to obtain the value B using Expression (2),

$$B = D_C/D_D \text{ ... Expression (2).}$$

As described above, in the measurement of the value B, the measurement is performed in the thickest part of the honeycomb sandwich structural body. Even when the value B is outside the above-described range in a part other than the thickest part, in a case where the value B satisfies the above-described range in the thickest part, it can be considered to correspond to this aspect.

A still further aspect of the present invention is a honeycomb sandwich structural body, comprising: a honeycomb core sandwiched between CFRP layers, wherein the CFRP layer includes a woven fabric layer having a fiber-reinforced material of woven fabric, and a standard deviation of distances associated with woven fabric threads of each split layer is 30 μm or less, which is obtained by the following measurement method for the woven fabric layer:

(Measurement Method for Standard Deviation of Distances)

when one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B; and in each of a split layer closer to a surface layer side and a split layer closer to a honeycomb core side than the thread A in the woven fabric layer, a shortest distance from the centroid position to an outer surface of the honeycomb sandwich structural body is obtained for each of five adjacent threads B to calculate a standard deviation of the distances.

A still further aspect of the present invention is a honeycomb sandwich structural body, comprising: a honeycomb core sandwiched between CFRP layers, wherein in at least one of the CFRP layers sandwiching the honeycomb core, a woven fabric layer having a fiber-reinforced material of woven fabric is disposed in a CFRP layer closest to a honeycomb core side, and a standard deviation of distances associated with woven fabric threads of each split layer is 30 μm or less, which is obtained by the following measurement method for the woven fabric layer:

(Measurement Method for Standard Deviation of Distances)

when one of orthogonal woven fabric threads of the woven fabric closest to the honeycomb core side is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B; and in each of a split layer closer to a surface layer side and a split layer closer to the honeycomb core side than the thread A in the woven fabric layer closest to the honeycomb core side, a shortest distance from the centroid position to an outer surface of the honeycomb sandwich structural body is obtained for each of five adjacent threads B to calculate a standard deviation of the distances.

A still further aspect of the present invention is a honeycomb sandwich structural body, comprising: a honeycomb core sandwiched between CFRP layers, wherein the CFRP layer includes a woven fabric layer having a fiber-reinforced material of woven fabric, and a standard deviation of angles associated with woven fabric threads of the woven fabric layer is 1.5 degrees or less, which is obtained by the following measurement method:

(Measurement Method for Standard Deviation of Angles)

when one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B; and for each of ten adjacent threads B in the woven fabric layer, an angle between a long axis direction in which the cross section of the thread B is approximated to an ellipse and a reference line that is parallel to a tangent to an outer surface at a closest point to the thread B on an outer surface curve of the honeycomb sandwich structural body and passes through a centroid of the thread B is obtained to calculate a standard deviation of the angles.

Advantageous Effects of Invention

A novel manufacturing method for a honeycomb sandwich structural body is provided in which a honeycomb core is sandwiched between CFRP layers.

In addition, a honeycomb sandwich structural body having excellent rigidity is provided. Furthermore, a honeycomb sandwich structural body having a good appearance is provided.

BRIEF DESCRIPTION OF DRAWINGS

[FIG. 1] A cross-sectional view of a wing for an unmanned aerial vehicle that can be manufactured using a manufacturing method according to an embodiment.

[FIG. 2] A view showing a honeycomb core that can be used in the manufacturing method according to the embodiment. (A) in FIG. 2 is a perspective view, and (B) in FIG. 2 is a plan view.

[FIG. 3] A cross-sectional view showing an example of a state in which a metal mold for primary molding is charged with the honeycomb core and first prepregs.

[FIG. 4] A cross-sectional view showing an example of the state in which a metal mold for primary molding is charged with the honeycomb core and first prepregs.

[FIG. 5] A cross-sectional view showing a state in which a metal mold for secondary molding is charged with a primary molded product and second prepregs.

[FIG. 6] A cross-sectional view schematically showing a state in the metal mold during primary molding.

[FIG. 7] A cross-sectional view schematically showing a state in the metal mold during secondary molding.

[FIG. 8] A cross-sectional view showing an example of a portable metal mold that can be used in the manufacturing method according to the embodiment.

[FIG. 9] A cross-sectional view showing an example of a press machine that can be used in the manufacturing method according to the embodiment.

[FIG. 10] A plan view showing a lower plate portion of the press machine.

[FIG. 11] A plan view (viewed from below) showing an upper plate portion of the press machine.

[FIG. 12] A cross-sectional view showing a state in which the charged portable metal mold is pressurized by the press machine.

[FIG. 13] A cross-sectional view showing an example of the press machine that can be used in the manufacturing method according to the embodiment.

[FIG. 14] A cross-sectional view showing an example of the press machine that can be used in the manufacturing method according to the embodiment.

[FIG. 15] An example of a cross-sectional view of a binarized cross section of a woven fabric layer of a honeycomb sandwich structural body of Experimental Example 1.

[FIG. 16] An example of a cross-sectional view of a binarized cross section of a woven fabric layer of a honeycomb sandwich structural body of Experimental Example 2.

[FIG. 17] An explanatory view showing an angle between a long axis direction of a fiber bundle cross section (cross section of a thread B) and a reference line.

[FIG. 18] An explanatory view of a CFRP layer including woven fabric layers.

DESCRIPTION OF EMBODIMENTS

1. Honeycomb Sandwich Structural Body

A manufacturing method according to an embodiment relates to a manufacturing method for a honeycomb sandwich structural body, and for example, it can be preferably used for manufacturing a wing for an unmanned aerial vehicle having a honeycomb sandwich structure.

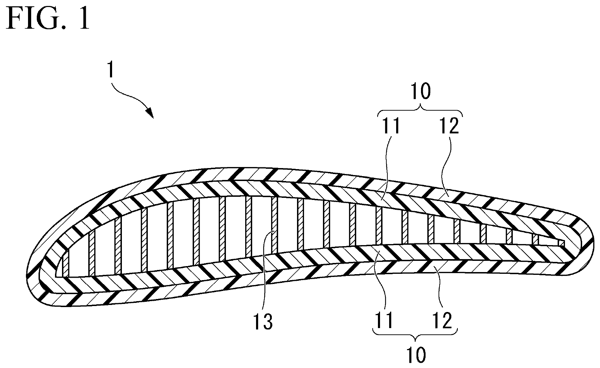

FIG. 1 is a cross-sectional view of a wing for an unmanned aerial vehicle that can be manufactured using the manufacturing method according to the embodiment.

A wing 1 is a honeycomb sandwich structural body, and has a structure in which a honeycomb core 13 is sandwiched between two CFRP layers 10, composed of a first CFRP layer 11 and a second CFRP layer 12.

The honeycomb core 13 is processed into a predetermined shape by cutting or pressing forming as disclosed in Japanese Unexamined Patent Application, First Publication No. 2021-112849.

The material of metal foil constituting the honeycomb core 13 is an aluminum alloy (typically, A5052 which is an Al-Mg-based aluminum alloy or A3003 which is an Al-Mn-based aluminum alloy), but other metals such as stainless steel may be used.

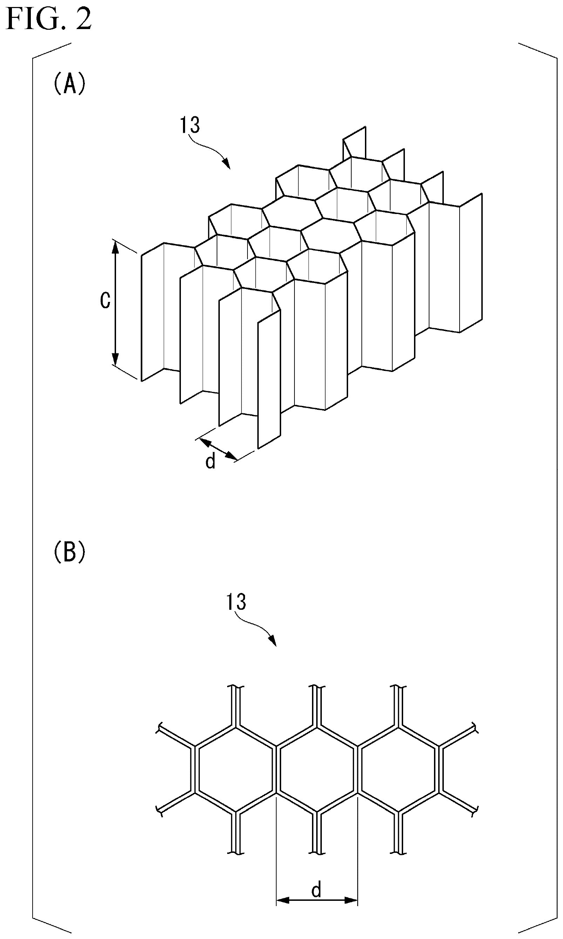

The cell size and the thickness of the honeycomb core are defined as shown in FIG. 2.

A cell size d of the honeycomb core 13 is preferably 2 to 20 mm.

The foil thickness of the metal foil constituting the honeycomb core 13 is preferably 20 to 120 $\mu$m.

A maximum thickness C of the honeycomb core 13 is, for example, 1 to 50 mm, preferably 2 to 10 mm, and more preferably 2 to 7 mm.

The materials of the first CFRP layer 11 and the second CFRP layer 12 are CFRP. CFRP is a composite material in which a fiber-reinforced material containing carbon fibers is impregnated with a thermosetting resin composition and then cured.

The honeycomb core 13 may penetrate into the first CFRP layer 11. In that case, the carbon fibers may be cut at penetrated portions.

The honeycomb core 13 does not penetrate into the second CFRP layer 12, and the carbon fibers are not cut by the honeycomb core 13 in the second CFRP layer 12.

The first CFRP layer 11 may include more voids than the second CFRP layer 12. The second CFRP layer 12 includes no voids, or even when voids are included, the number of voids is small.

The honeycomb sandwich structural body that can be manufactured using the manufacturing method according to the embodiment is not limited to wings for an unmanned aerial vehicle. The manufacturing method according to the embodiment can also be preferably used for manufacturing a honeycomb sandwich structural body used as a component or a construction material of space equipment, home appliances, vehicles, ships, and the like.

In the honeycomb sandwich structural body manufactured using the manufacturing method according to the embodiment, specifications such as the material, cell size, foil thickness, and maximum thickness of the honeycomb core are appropriately determined according to the application.

As the honeycomb core, not only a metal honeycomb core formed of a metal such as an aluminum alloy or stainless steel, but also a paper honeycomb core or a fiber-reinforced plastics (FRP) honeycomb core such as an aramid honeycomb core formed of aramid fiber paper impregnated with a phenol resin can be used.

Preferably, the honeycomb core is charged into a metal mold together with a first prepreg while in a flat plate shape, and molded into a desired shape together with the first prepreg by pressing. The honeycomb core may be charged into the metal mold together with the first prepreg after being processed into a desired shape or close to the desired shape in advance.

As will be described later, in the honeycomb sandwich structural body of the present embodiment, the first prepreg is cured by primary molding, and then a second prepreg is cured by secondary molding.

During the primary molding, the first prepreg is pressed against the metal mold on the honeycomb core, and thus the first prepreg has a part pressed against the metal mold and a part not pressed against the metal mold. During the secondary molding, the second prepreg is pressed against the metal mold on the entire surface of a cured first molded product, and thus disorder of the alignment of the fiber-reinforced material can be reduced.

In a honeycomb sandwich structural body manufactured using a manufacturing method according to one example of the embodiment, including a honeycomb core sandwiched between CFRP layers, the CFRP layer includes a woven fabric layer having a fiber-reinforced material of woven fabric, and a standard deviation of distances associated with woven fabric threads of each split layer is 30 $\mu$m or less, which is obtained by the following measurement method for the woven fabric layer.

(Measurement Method for Standard Deviation of Distances)

When one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B. In each of a split layer closer to a surface layer side and a split layer closer to a honeycomb core side than the thread A in the woven fabric layer, a shortest distance from the centroid position to an outer surface of the honeycomb sandwich structural body is obtained for each of five adjacent threads B to calculate a standard deviation of the distances.

Although it is usually not known which of the orthogonal woven fabric threads in the woven fabric in the CFRP layer is the warp thread and which is the weft thread, either the warp thread or the weft thread may be the thread A or the thread B, and the standard deviation of distances is 30 $\mu$m or less in either case.

When the CFRP layer includes a plurality of woven fabric layers, the standard deviation of distances measured in association with the woven fabric threads of split layers of each of the woven fabric layers is 30 $\mu$m or less in all cases.

When the standard deviation of distances is 30 $\mu$m or less, the woven fabric threads are disposed along the outer surface of the honeycomb sandwich structural body, and the strength of the honeycomb sandwich structural body is likely to be uniform.

From these viewpoints, the standard deviation of distances is preferably 25 $\mu$m or less, and more preferably 20 $\mu$m or less.

The woven fabric layer may be provided in at least one of the CFRP layers sandwiching the honeycomb core.

In addition, the woven fabric layer is preferably provided in the CFRP layer at a position closest to the honeycomb core side in the CFRP layer. Since the woven fabric layer disposed in the CFRP layer at a position closest to the honeycomb core side is pressed against the metal mold in a thickness direction of the honeycomb core, fiber disorder is likely to be reduced.

Separately from the position closest to the honeycomb core, it is also preferable that the woven fabric layer be provided in the outermost layer of the CFRP layer. The appearance is likely to be improved by providing the woven fabric layer in the outermost layer.

In the CFRP layer including the woven fabric layer, the fiber-reinforced material of the woven fabric can be combined with a unidirectional (UD) fiber-reinforced material or a fiber-reinforced material of nonwoven fabric. These may be used according to the desired physical properties.

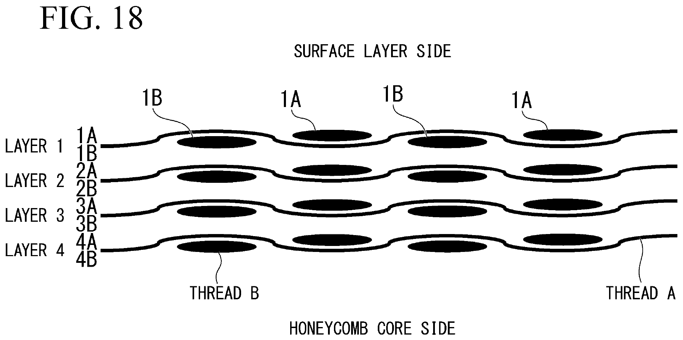

FIG. 18 is an explanatory view showing a CFRP layer including four woven fabric layers, as an example of the CFRP layer including the woven fabric layer.

Split layers of the woven fabric layer mean layers when, in each woven fabric layer, a thread B on the thread A's surface layer side is referred to as a layer A and a thread B on the thread A's honeycomb core side is referred to as a layer B. In FIG. 18, the woven fabric layers are labeled as layers 1, 2, 3, and 4 from a surface layer side, "1A" indicates a layer A in the layer 1, "1B" indicates a layer B in the layer 1, and the same also applies to 2A, 2B, 3A, 3B, 4A, and 4B.

(Detailed Description of Measurement Method for Standard Deviation of Distances)

From the honeycomb sandwich structural body, a small piece in which a cross section of the structural body including a woven fabric layer, which is orthogonal to a thread B of the woven fabric, can be observed is cut out and embedded in an epoxy resin. Then, the cross section is polished by a rotary polishing machine (Tegramin-25, manufactured by Struers, #4000) to produce a sample.

An image of the polished cross section is captured at a magnification of 80 times using a laser microscope (VHX-8000, manufactured by KEYENCE CORPORATION).

Regarding the captured cross-sectional observation image, a distance per pixel from a scale bar of the cross-sectional observation image is acquired using image-processing software ImageJ to convert the coordinates from the pixel number to the length scale, and then the outer surface of the honeycomb sandwich structural body is approximated by a line or a spline curve to obtain an outer surface curve. Next, the contour of the fiber bundle (thread B) aligned in a direction orthogonal to the image plane is approximated by a spline curve, and cross sections of the fiber bundle (thread B) are extracted by binarization processing.

From all the extracted cross sections of the threads B, a standard deviation of shortest distances from the centroid coordinates (centroid position) to the outer surface is obtained in association with five adjacent threads B of each split layer.

The method for converting the coordinates from the pixel number to the length scale using the image-processing software ImageJ and the method for obtaining the outer surface curve of the honeycomb sandwich structural body are also adopted in measurement methods to be described later.

In a honeycomb sandwich structural body manufactured using a manufacturing method according to one example of the embodiment, including a honeycomb core sandwiched between CFRP layers, in at least one of the CFRP layers sandwiching the honeycomb core, a woven fabric layer having a fiber-reinforced material of woven fabric is disposed in a CFRP layer at a position closest to a honeycomb core side, and a standard deviation of distances associated with woven fabric threads of each split layer is 30 μm or less, which is obtained by the following measurement method for the woven fabric layer.

(Measurement Method for Standard Deviation of Distances)

When one of orthogonal woven fabric threads of the woven fabric closest to the honeycomb core side is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B. In each of a split layer closer to a surface layer side and a split layer closer to the honeycomb core side than the thread A in the woven fabric layer closest to the honeycomb core side, a shortest distance from the centroid position to an outer surface of the honeycomb sandwich structural body is obtained for each of five adjacent threads B to calculate a standard deviation of the distances.

Either the warp thread or the weft thread may be the thread A or the thread B, and the standard deviation of distances is 30 μm or less in either case.

When the standard deviation of distances obtained in association with the woven fabric threads of the woven fabric layer closest to the honeycomb core side is 30 μm or less, the woven fabric positioned in the woven fabric layer closest to the honeycomb core side is uniformly disposed along the outer surface of the honeycomb sandwich structural body, and the strength of the honeycomb sandwich structural body is likely to be uniform.

From these viewpoints, the standard deviation of distances in the woven fabric layer closest to the honeycomb core side is preferably 25 μm or less, and more preferably 20 μm or less.

In a honeycomb sandwich structural body manufactured using a manufacturing method according to one example of the embodiment, including a honeycomb core sandwiched between CFRP layers, the CFRP layer includes a woven fabric layer having a fiber-reinforced material of woven fabric, and a standard deviation of angles associated with woven fabric threads of the woven fabric layer is 1.5 degrees or less, which is obtained by the following measurement method.

When the CFRP layer includes a plurality of woven fabric layers, the standard deviation of angles measured in association with the woven fabric threads of each woven fabric layer is 1.5 degrees or less in all cases.

When the standard deviation of angles is 1.5 degrees or less, the woven fabric surface is disposed along the outer surface of the honeycomb sandwich structural body, and the strength of the honeycomb sandwich structural body is likely to be uniform.

From these viewpoints, the standard deviation of angles is preferably 1.2 degrees or less, and more preferably 1.0 degree or less.

(Measurement Method for Standard Deviation of Angles)

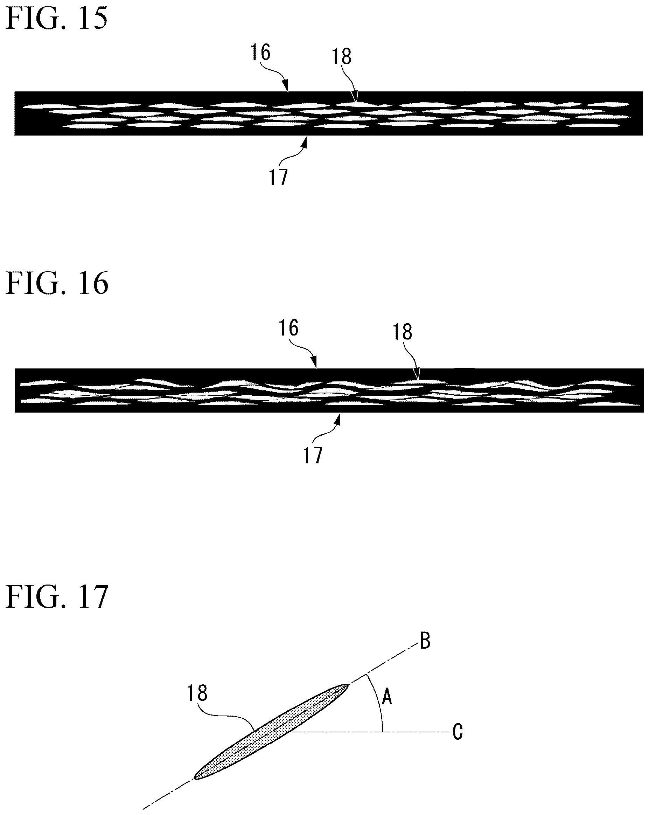

When one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B. For each of ten adjacent threads B in the woven fabric layer, as shown in FIG. 17, an angle A between a long axis direction B in which the cross section (fiber bundle cross section 18) of the thread B is approximated to an ellipse and a reference line C that is parallel to a tangent to an outer surface at a closest point to the thread B on an outer surface curve of the honeycomb sandwich structural body and passes through a centroid of the thread B is obtained to calculate a standard deviation of the angles.

Either the warp thread or the weft thread may be the thread A or the thread B, and the standard deviation of angles is 1.5 degrees or less in either case.

In a honeycomb sandwich structural body manufactured using a manufacturing method according to one example of the embodiment, including a honeycomb core sandwiched between CFRP layers, a value A obtained by dividing a standard deviation $D_A$ ($\mu$m) of distances between an outer surface of the honeycomb sandwich structural body and an innermost surface of the CFRP layer, which is obtained by the following measurement method, by an average value $D_B$ ($\mu$m) of the distances is 0.01 or more and 0.10 or less.

(Measurement Method for Standard Deviation and Average Value of Distances Between the Outer Surface and the Innermost Surface)

An image of a cross section of the thickest part of the honeycomb sandwich structural body, cut in parallel with a thickness direction of the honeycomb core, is captured, and the cross section is binarized using image-processing software ImageJ. In a range of 20 mm in a direction perpendicular to the thickness direction of the honeycomb core in the image of the cross section, coordinates of the outer surface of the honeycomb sandwich structural body and coordinates of the innermost surface of the CFRP layer are acquired for each pixel. For each point of the coordinates of the outer surface, a distance between the coordinates of the outer surface and the coordinates of the innermost surface positioned in a normal direction to the outer surface at the coordinates of the outer surface is measured to calculate a standard deviation $D_A$ of the distances and an average value $D_B$ of the distances.

By adopting two-stage molding consisting of primary molding and secondary molding to be described later, the prepreg thickness in the first stage can be reduced. Therefore, even when the prepreg is pressed by the honeycomb core, the rectilinearity of the prepreg is likely to be maintained, and the value A can be reduced. Since the variation in thickness of the CFRP layer is small, the rigidity of the honeycomb sandwich structural body is increased.

The value A being 0.01 or more and 0.10 or less is a feature of the two-stage molding.

A honeycomb sandwich structural body manufactured using a manufacturing method according to one example of the embodiment preferably includes a CFRP layer (woven fabric layer) having a fiber-reinforced material of woven fabric and a CFRP layer (UD layer) having a unidirectional (UD) fiber-reinforced material.

Due to inclusion of the woven fabric layer, it is possible to prevent the honeycomb sandwich structural body from breaking, and due to inclusion of the UD layer, it is possible to increase the rigidity in a specific direction.

In a honeycomb sandwich structural body manufactured using a manufacturing method according to one example of the embodiment, the UD layer is disposed closer to an outer surface side of the honeycomb sandwich structural body than the woven fabric layer, and a value B obtained by dividing a standard deviation $D_C$ ($\mu$m) of distances from an outer surface of the honeycomb sandwich structural body to an interface between the woven fabric layer and the UD layer, which is obtained by the following measurement method, by an average value $D_D$ ($\mu$m) of the distances is 0.01 or more and 0.10 or less.

(Measurement Method for Standard Deviation of Distances from Outer Surface to Interface and Average Value of Distances)

An image of a cross section of the thickest part of the honeycomb sandwich structural body, cut in parallel with a thickness direction of the honeycomb core, is captured, and the cross section is binarized using image-processing software ImageJ. In a range of 20 mm in a direction perpendicular to the thickness direction of the honeycomb core in the image of the cross section, coordinates of the outer surface of the honeycomb sandwich structural body and coordinates of the interface between the woven fabric layer and the UD layer are acquired for each pixel. For each point of the coordinates of the outer surface, a distance between the coordinates of the outer surface and the coordinates of the interface positioned in a normal direction to the outer surface at the coordinates of the outer surface is measured to calculate a standard deviation $D_C$ of the distances and an average value $D_D$ of the distances.

By performing the two-stage molding, the rectilinearity of each layer is improved, and thus the rigidity of the honeycomb sandwich structural body is increased.

The value B being 0.01 or more and 0.10 or less is a feature of the two-stage molding.

2. Manufacturing Method for Honeycomb Sandwich Structural Body

A manufacturing method according to the embodiment will be described using a case where the wing 1 is manufactured as an example.

(1) Primary Molding

As materials, a honeycomb core that is in a flat plate shape or is processed into a predetermined shape by cutting or pressing (method disclosed in Japanese Unexamined Patent Application, First Publication No. 2021-112849) and at least two first prepregs are prepared.

The first prepreg is a sheet formed of a reinforced material consisting of carbon fibers and a thermosetting resin matrix. The resin matrix is preferably an epoxy resin composition.

Examples of the first prepreg include, but are not limited to, a UD prepreg, a woven fabric prepreg, a nonwoven fabric prepreg, and a sheet molding compound (SMC).

The at least two first prepregs preferably include at least one of a UD prepreg and a woven fabric prepreg.

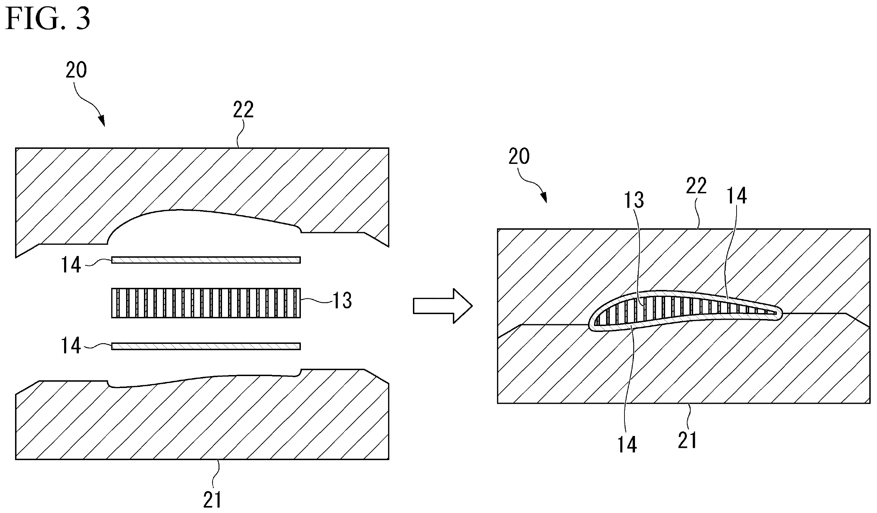

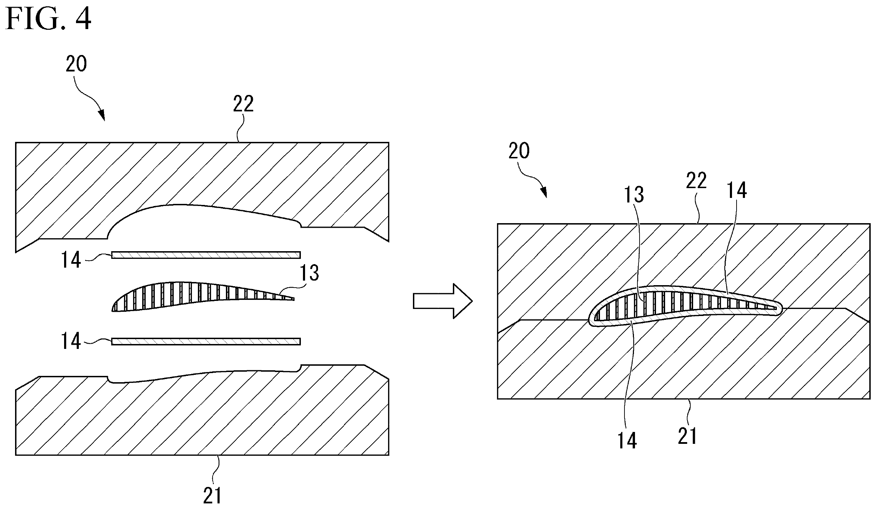

As shown in FIGS. 3 and 4, a metal mold 20 for primary molding is charged with a honeycomb core 13 and at least two first prepregs 14. In other words, the honeycomb core 13 and at least two first prepregs 14 are put in a molding cavity formed when the metal mold 20 for primary molding formed of a lower mold 21 and an upper mold 22 is closed.

The honeycomb core 13 is disposed in the molding cavity so that a thickness direction thereof is in a vertical direction, and at least one first prepreg 14 is disposed above and below the honeycomb core 13, that is, on each of both surfaces of a honeycomb surface.

FIG. 3 shows an embodiment in which a honeycomb core 13 processed into a desired shape or close to the desired shape in advance is used, and FIG. 4 shows an embodiment in which a honeycomb core 13 having a flat plate shape is used.

A release agent is preferably applied to a part of the metal mold 20 for primary molding where the molding cavity is formed. By applying the release agent, a primary molded product can be easily taken out from the metal mold 20 for primary molding.

The number of first prepregs disposed above the honeycomb core and the number of first prepregs disposed below the honeycomb core is preferably 1 or more and 5 or less, and more preferably 3 or less. In a case where the number of first prepregs is small, the prepreg in contact with the honeycomb core is molded without large undulations, and thus the rigidity is likely to be increased. From this viewpoint, the number of first prepregs is preferably 3 or less on each side.

When a large structural body is obtained, a large thickness is required compared to a case where a small structural body is obtained. Therefore, the greater the number of first prepregs, the easier it is to obtain rigidity and strength. Therefore, from this viewpoint, the number of first prepregs is preferably 5 or more and 30 or less on each side.

An end portion of the first prepreg 14 disposed below the honeycomb core 13 may wrap around the honeycomb core 13. An end portion of the first prepreg 14 disposed above the honeycomb core 13 may wrap around the honeycomb core 13.

The thickness direction of the honeycomb core 13 refers to a height direction of a plurality of hexagonal columnar cells of the honeycomb core 13.

The type and the number of first prepregs 14 disposed below the honeycomb core 13 and the type and the number of first prepregs 14 disposed above the honeycomb core 13 may be the same or different from each other.

When two or more UD prepregs are disposed to overlap each other as the first prepreg 14 below the honeycomb core 13, the UD prepregs may be laminated so that their fiber directions match, or may be cross-ply laminated or angle-ply laminated. The same also applies to a case where two or more UD prepregs are disposed to overlap each other as the first prepreg 14 above the honeycomb core 13.

An adhesive film can be disposed between the honeycomb core 13 and the first prepreg 14.

A portion in which the number of first prepregs disposed above and below the honeycomb core is partially large can be included.

By partially increasing the number of first prepregs 14, the rigidity in a specific direction is easily increased with a reduced increase in weight of the honeycomb sandwich structural body.

The prepreg partially disposed is preferably a UD prepreg. From the viewpoint of bending rigidity, the fiber direction of the UD prepreg is preferably directed in a direction in which the length of the structural body is long.

The charged metal mold 20 for primary molding is pressurized and heated using a press machine to cure the first prepregs, and thus a primary molded product is obtained.

As in the example shown in FIG. 4, when a honeycomb core having a flat plate shape is used, the charged metal mold 20 for primary molding is pressurized and heated using a press machine to cure the first prepregs while molding the honeycomb core into a desired shape, and a primary molded product is thus obtained. In this case, the first prepregs can be disposed while the honeycomb core is in a flat plate state, and thus the first prepregs are easily disposed and less likely to wrinkle.

In addition, the first prepregs can also be uniformly pressurized by the honeycomb core.

The primary molded product is a honeycomb sandwich structural body in which the honeycomb core is sandwiched between two first CFRP layers. The first CFRP layers are cured products of the first prepregs.

In order to shorten the time required for curing the first prepregs, the press machine is preferably heated to a molding temperature until the charging of the metal mold for primary molding is completed. The molding temperature may be 110°C or higher and 120°C or lower, 120°C or higher and 135°C or lower, 135°C or higher and 145°C or lower, 145°C or higher and 150°C or lower, 150°C or higher and 180°C or lower, or the like.


(2) Secondary Molding

At least two second prepregs are further prepared for secondary molding.

The second prepreg is a sheet formed of a reinforced material consisting of carbon fibers and a thermosetting resin matrix, like the first prepreg. The resin matrix is preferably an epoxy resin composition.

Examples of the second prepreg include, but are not limited to, a UD prepreg, a woven fabric prepreg, a nonwoven fabric prepreg, and a sheet molding compound (SMC).

The at least two second prepregs preferably include at least one of a UD prepreg and a woven fabric prepreg.

The prepreg to be an outermost layer is preferably a woven fabric prepreg since the fibers at an end portion are less likely to be disordered.

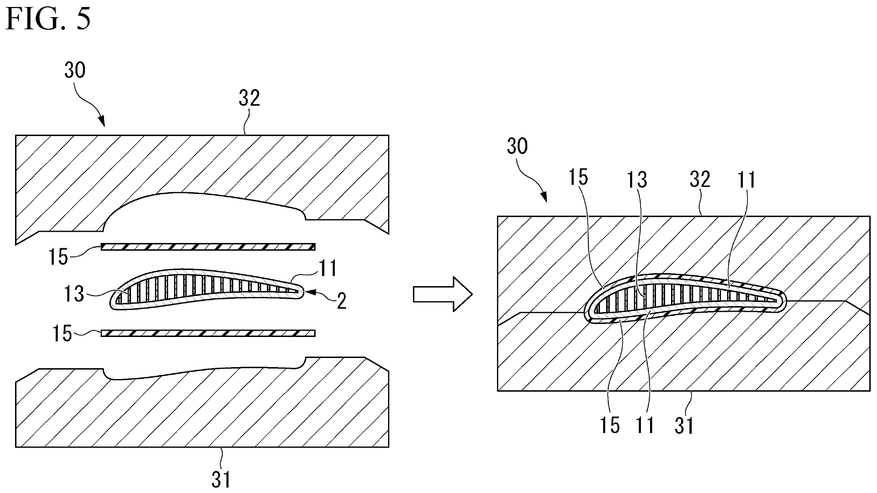

As shown in FIG. 5, a metal mold 30 for secondary molding is charged with a primary molded product 2 and at least two second prepregs 15. In other words, the primary molded product 2 and at least two second prepregs 15 are put in a molding cavity formed when the metal mold 30 for secondary molding formed of a lower mold 31 and an upper mold 32 is closed.

The metal mold 30 for secondary molding is different from the metal mold 20 for primary molding in that the metal mold 30 for secondary molding is larger than the metal mold 20 for primary molding by the amount of an increase in thickness due to the lamination of the second prepregs.

When a release agent is applied to the metal mold in the primary molding, the release agent is attached to the primary molded product, and the adhesiveness to the second prepregs deteriorates. Therefore, it is necessary to remove the release agent attached to the primary molded product.

As a method of removing the release agent, polishing by sandblasting or the like or a degreasing treatment is performed.

The primary molded product 2 is disposed in the molding cavity so that the thickness direction of the honeycomb core 13 included in the primary molded product 2 is in a vertical direction, and at least one second prepreg 15 is disposed above and below the primary molded product 2. An end portion of the second prepreg 15 disposed below the primary molded product 2 may wrap around the primary molded product 2. An end portion of the second prepreg 15 disposed above the primary molded product 2 may wrap around the primary molded product 2.

In this manner, the fiber-reinforced materials of the second prepregs 15 are connected to the upper and lower sides of the primary molded product 2, and thus the strength of the molded product can be increased, and a favorable appearance having no boundary between the upper and lower sides can be obtained.

The type and the number of second prepregs 15 disposed below the primary molded product 2 and the type and the number of second prepregs 15 disposed above the primary molded product 2 may be the same or different from each other.

When two or more UD prepregs are disposed to overlap each other as the second prepreg 15 below the primary molded product 2, the UD prepregs may be laminated so that their fiber directions match, or may be cross-ply laminated or angle-ply laminated. The same also applies to a case where two or more UD prepregs are disposed to overlap each other as the second prepreg 15 above the primary molded product 2.

The charged metal mold 30 for secondary molding is pressurized and heated using the press machine to cure the second prepregs, and thus a secondary molded product, that is, a target molded product is obtained.

The secondary molded product is a honeycomb sandwich structural body in which the honeycomb core 13 is sandwiched between the two first CFRP layers 11 and second CFRP layers 12 laminated on the first CFRP layers 11. The second CFRP layers are cured products of the second prepregs.

In order to shorten the time required for curing the second prepregs, the press machine is preferably heated to a molding temperature until the charging of the metal mold for secondary molding is completed. The molding temperature may be 110°C or higher and 130°C or lower, 130°C or higher and 135°C or lower, 135°C or higher and 145°C or lower, 145°C or higher and 150°C or lower, 150°C or higher and 180°C or lower, or the like.

(3) Effects

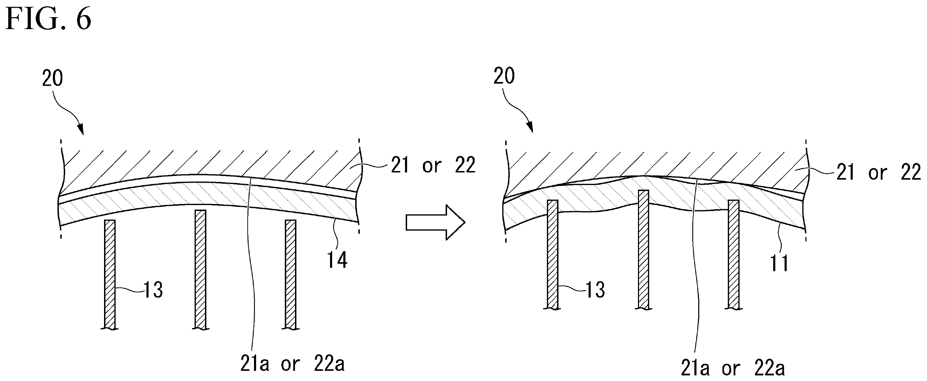

In the primary molding, as shown in FIG. 6 (left side), the first prepreg 14 is disposed between the honeycomb core 13 and the metal mold 20.

When the metal mold 20 is pressurized by a press machine, the first prepreg 14 is pressed against the surface of the metal mold 20 by the honeycomb core 13. However, as shown in FIG. 5 (right side), only the edge of the metal foil constituting the honeycomb core 13 is in contact with the first prepreg 14, and thus the entire first prepreg 14 is not uniformly pressed against the surface of the metal mold 20. Therefore, the shape of the metal mold 20 (shapes of a surface 21a of the lower mold 21 and a surface 22a of the upper mold 22) is not sufficiently reflected in the surface shape of the first CFRP layer 11. In addition, since the first prepreg 14 is not sufficiently pressurized, voids are likely to be generated inside the first CFRP layer 11.

Furthermore, as shown in FIG. 6 (right side), the honeycomb core 13 may penetrate into the first CFRP layer 11, and the carbon fibers may be cut accordingly.

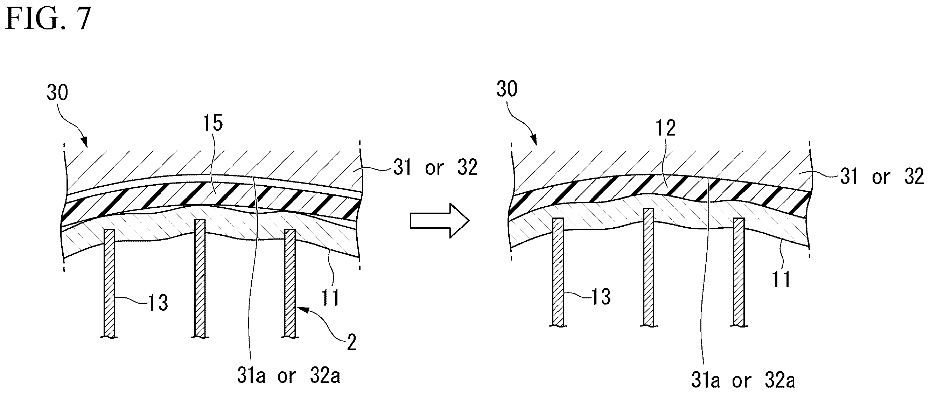

In the secondary molding, as shown in FIG. 7 (left side), the second prepreg 15 is disposed between the primary molded product 2 and the metal mold 30.

As shown in FIG. 7 (right side), when the metal mold 30 is pressurized by the press machine, the second prepreg 15 is pressed against the surface of the metal mold 30 by the first CFRP layer 11 of the primary molded product 2. Since the entire surface of the first CFRP layer 11 is in contact with the second prepreg 15, the entire second prepreg 15 is uniformly pressurized.

As a result, the shape of the metal mold 30 (shapes of a surface 31a of the lower mold 31 and a surface 32a of the upper mold 32) is sufficiently reflected in the surface shape of the second CFRP layer 12. In addition, voids are less likely to be generated inside the second CFRP layer 12. Furthermore, in the second CFRP layer 12, the carbon fibers are not cut due to the penetrating of the honeycomb core.

With the manufacturing method according to one example of the embodiment, the honeycomb sandwich structural body can be obtained in two steps, and thus efficient production is possible.

In addition, since the second prepreg can be uniformly pressurized between the cured first CFRP layer and the metal mold, thickness unevenness and distortion of the second CFRP layer can be reduced, and the rigidity can be increased.

3. Preferred Embodiments

(1) Use of Portable Metal Mold

In 2. Manufacturing Method described above, a portable metal mold is preferably used in at least the secondary forming, and preferably in both the primary molding and the secondary molding. The portable metal mold can be charged outside the press machine, and for example, can be charged in a room at a temperature of 17°C to 28°C.

The temperature of the portable metal mold during charging is preferably the same as the temperature of a work environment.

For example, the portable metal mold heated for drying after washing may be charged before the temperature is lowered to the temperature of the work environment. However, even in that case, in order to prevent the generation of wrinkles in the prepreg during handling, the portable metal mold is preferably charged after waiting until the temperature of the portable metal mold reaches 40°C or lower.

In particular, it is important to dispose the UD prepreg or the woven fabric prepreg in the portable metal mold to prevent the generation of wrinkles. This is because, in a case where wrinkles are generated, disorder occurs in the alignment of the fiber-reinforced material, and thus the mechanical characteristics after curing may be reduced.

When the temperature of the portable metal mold is 40°C or lower or a further lower temperature of 28°C or lower, even when the charging takes a long time, the temperature of the prepreg does not rise, and the surface tackiness does not increase during charging. Accordingly, the prepreg is less likely to wrinkle.

When the portable metal mold is used, the charged portable metal mold is preferably preheated before pressurization and heating by the press machine. In this case, the time for heating the portable metal mold by the press machine can be shortened, and thus the number of times of molding to be performed by one press machine per day can be increased.

The preheating is performed within a range in which the viscosity of the resin matrix of the prepreg does not significantly decrease. Specifically, the temperature of the portable metal mold after preheating is preferably 40°C or higher and 80°C or lower, and more preferably 60°C or higher and 80°C or lower. When the temperature of the portable metal mold is 80°C or lower, the portable metal mold can be handled with hands wearing gloves, so there is no problem in transportation or the like.

(2) Portable Metal Mold

The material of the portable metal mold may be carbon steel or alloy steel (steel having chromium, molybdenum, tungsten, vanadium, or the like added thereto) that has been used as a steel material for plastic molding in the related art. However, since the portable metal mold has no heat source inside and is heated by a heat source provided in the press machine, an aluminum alloy or beryllium copper is used as a more preferable material. These alloys have a high thermal conductivity of 100 W/(m·K) or more at 20°C.

The aluminum alloy is particularly preferable since it has high thermally conductive properties and is lightweight. The specific gravity at 20°C is about 7.9 for a steel material, and more than 8 for beryllium copper, while it is usually 2.7 to 2.8 for an aluminum alloy.

Examples of the aluminum alloy include, but are not limited to, 7000 series aluminum alloys (Al-Zn-Mg-based alloy) having the highest strength among aluminum alloys, and 2000 series aluminum alloys (Al-Cu-based alloy) having a strength comparable to that of a steel material.

Although the thermal conductivity of the aluminum alloy varies depending on the tempering, the thermal conductivity at 20°C is said to be 130 to 190 W/(m·K) for A2017 (duralumin), 150 W/(m·K) for A7003, and 130 W/(m·K) for A7075 (extra super duralumin).

In steel materials for plastic molding, even chromium-molybdenum steel having relatively high thermally conductive properties has a thermal conductivity of about 60 W/(m·K) at 20°C, and carbon steel has a lower thermal conductivity than the above thermal conductivity.

The weight of the portable metal mold is preferably 2 kg or more and 30 kg or less. When the weight is within this range, it is convenient to transport the portable metal mold. However, the weight of the portable metal mold is not limited to this range.

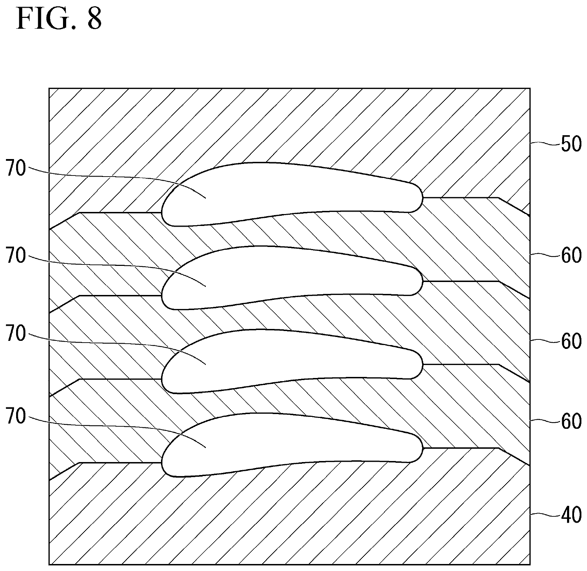

As shown in one example of FIG. 8, the portable metal mold may be formed of a lowermost plate 40, an uppermost plate 50, and intermediate plates 60.

The number of intermediate plates is not limited to three, and two or less or four or more intermediate plates may be used.

The planar shape of each plate is, for example, a rectangular shape. A handle can be attached to a side portion of any plate as necessary.

All the plates have the same outline shape and outline dimensions in plan view, and can be perfectly overlapped with each other.

When the lowermost plate 40, the intermediate plates 60, and the uppermost plate 50 are stacked to perfectly overlap each other, a molding cavity 70 is formed between the lowermost plate 40 and the intermediate plate 60 immediately above the lowermost plate 40, between the adjacent intermediate plates 60, and between the uppermost plate 50 and the intermediate plate 60 immediately below the uppermost plate 50.

In one example, one of the adjacent plates may be provided with a protrusion portion for alignment, the other may be provided with a recess portion for alignment, and the portions may be engaged with each other only when the two plates are stacked to perfectly overlap each other.

The entire lower surface of the lowermost plate and the entire upper surface of the uppermost plate are all flat. When all the plates are stacked, the lower surface of the lowermost plate and the upper surface of the uppermost plate are parallel to each other.

In one example, a plurality of molding cavities may be formed between the adjacent plates.

In one example, at least some of the plates constituting the portable metal mold may have an insert structure, and may be formed of a mother mold and an insert mold.

(3) Depressurization

In 2. Manufacturing Method described above, when a portable metal mold is used in at least the secondary molding and the portable metal mold is heated and pressurized by a press machine, a space around the portable metal mold is preferably depressurized.

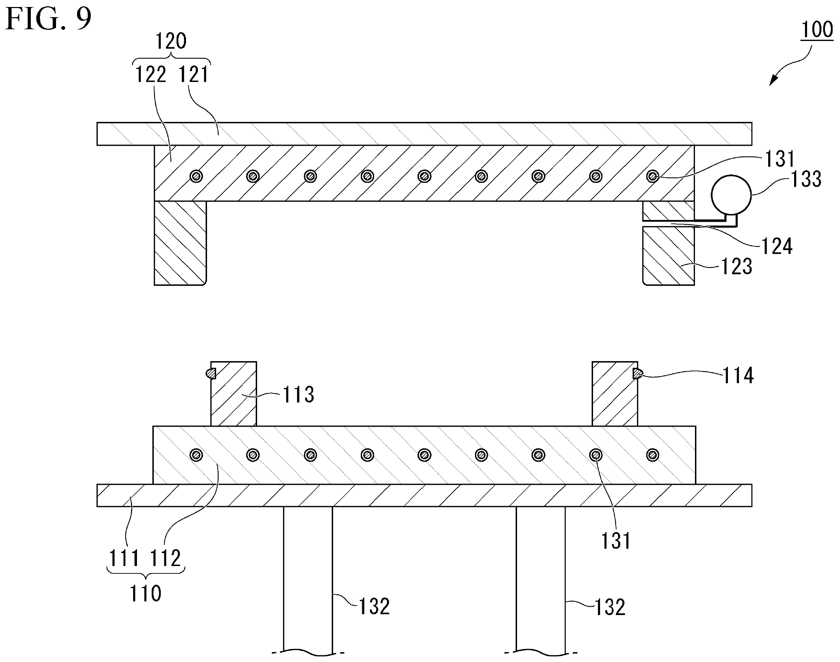

FIG. 9 shows one example of the press machine that can depressurize a space around the portable metal mold when the portable metal mold is heated and pressurized.

A press machine 100 includes a lower plate portion 110, an upper plate portion 120 that is disposed to face the lower plate portion 110 above the lower plate portion 110, and a pressurization mechanism (only cylinders 132 of the pressurization mechanism are shown in FIG. 9) that moves the lower plate portion 110 and the upper plate portion 120 in a direction in which the lower plate portion 110 and the upper plate portion 120 are brought close to each other.

The lower plate portion 110 is formed of a lower substrate 111 disposed horizontally and a lower hot plate 112 attached to the upper surface side of the lower substrate 111.

The upper plate portion 120 is formed of an upper substrate 121 disposed horizontally and an upper hot plate 122 attached to the lower surface side of the upper substrate 121. In FIG. 9, a frame fixing the upper plate portion 120 and the like is not shown.

The pressurization mechanism is preferably a hydraulic type since pressure control is easy. The cylinder 132 of the pressurization mechanism may be disposed to act on the upper plate portion 120 instead of the lower plate portion 110. Each of the lower hot plate 112 and the upper hot plate 122 has a built-in heater 131. Examples of the heater 131 include, but are not limited to, a steam heater, an oil heater, an electrothermal heater, and an electromagnetic induction heater.

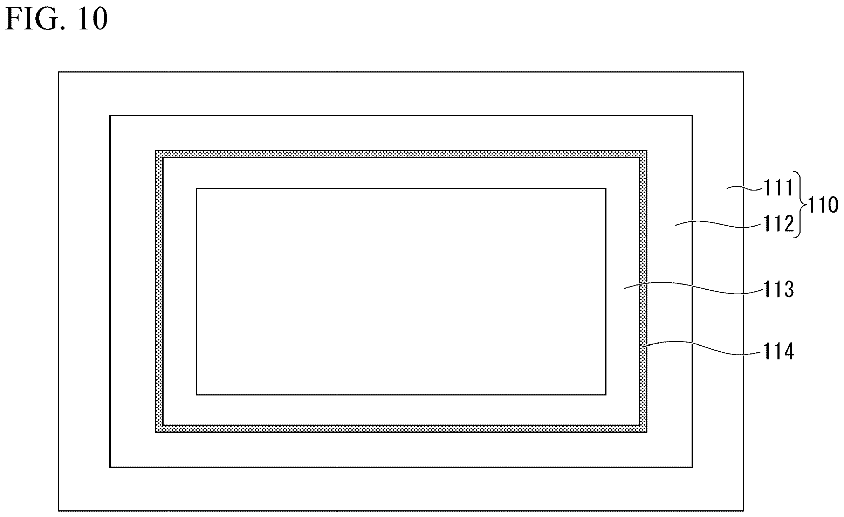

An annular lower wall member 113 is fixed to an upper surface of the lower hot plate 112. As shown in the plan view of FIG. 10, the lower wall member 113 has a structure in which four upstanding walls perpendicular to the upper surface of the lower hot plate 112 are connected to each other to form a rectangular ring. The lower wall member 113 is disposed slightly inside a circumferential surface of the lower hot plate 112.

The lower hot plate 112 and the lower wall member 113 may be integrated with each other without any joints. The lower wall member 113 is provided with a groove running around an outer circumferential surface, and a vacuum sealing ring 114 is fitted into the groove.

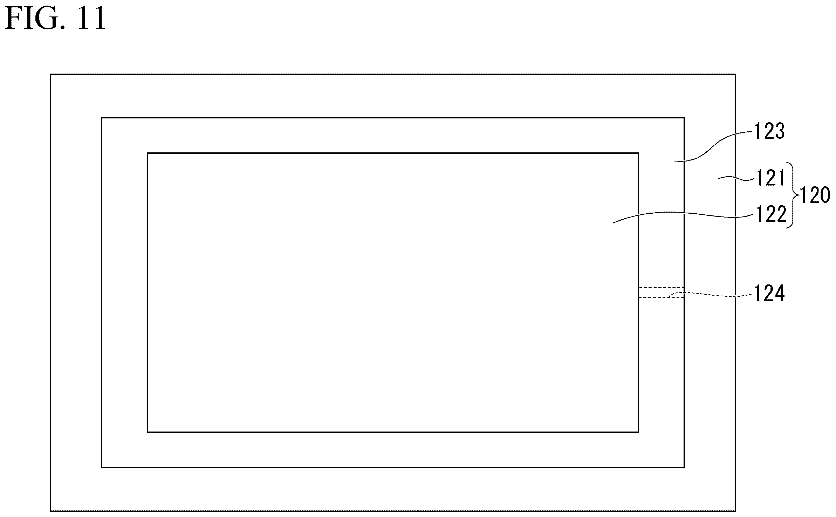

An annular upper wall member 123 is fixed to a lower surface of the upper hot plate 122. As shown in the plan view (viewed from below) of FIG. 11, the upper wall member 123 has a structure in which four upstanding walls perpendicular to the lower surface of the upper hot plate 122 are connected to each other to form a rectangular ring. The upper wall member 123 is disposed along a circumferential surface of the upper hot plate 122.

The upper hot plate 122 and the upper wall member 123 may be integrated with each other without any joints. The upper wall member 123 is provided with an exhaust hole 124 that penetrates one of the upstanding walls. The exhaust hole 124 is connected to a vacuum pump 133.

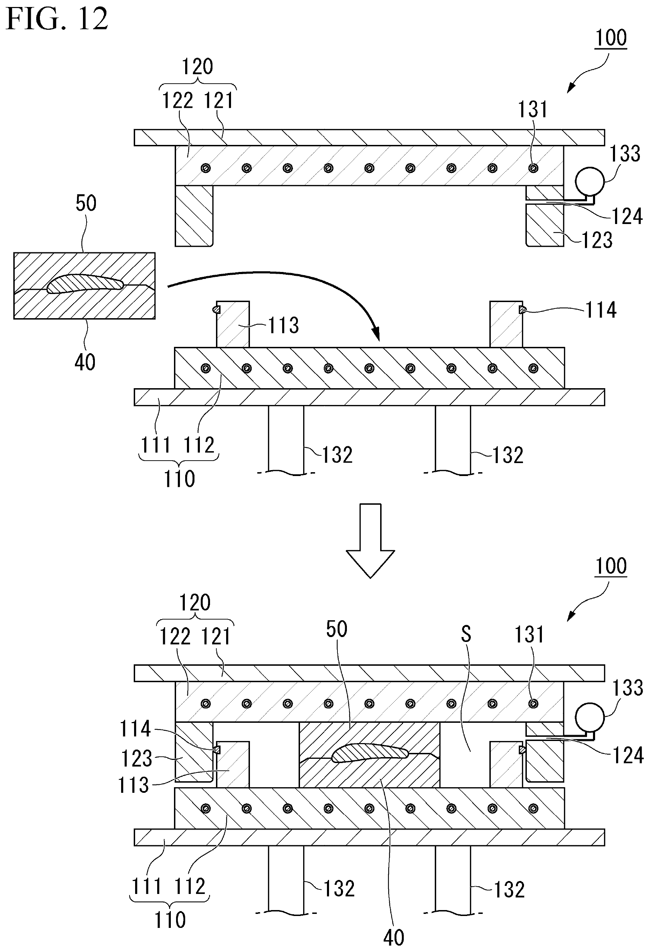

As shown in FIG. 12, when the charged portable metal mold is put on the lower hot plate and the pressurization mechanism is operated to bring the lower plate portion 110 close to the upper plate portion 120, the lower wall member 113 and the upper wall member 123 are engaged with each other through a vacuum sealing ring 114, and a closed space S surrounded by the lower hot plate 112, the lower wall member 113, the upper hot plate 122, and the upper wall member 123 is formed. The closed space S can be depressurized by operating the vacuum pump 133.

The closed space S is depressurized by operating the vacuum pump 133 so that the pressure after depressurization is preferably 0.1 Pa or less, and more preferably 0.01 Pa or less.

When the above operation is applied to the secondary molding described above, the closed space S is depressurized, and thus it is possible to prevent air bubbles generated between the first CFRP layer and the second prepreg from becoming voids after molding. In addition, the resin matrix of the second prepreg is degassed. Therefore, it is also possible to prevent voids from being formed inside the second CFRP layer. When a plurality of second prepregs are laminated, it is also possible to prevent air bubbles generated between the adjacent second prepregs from becoming voids after molding, and a favorable appearance is easily obtained.

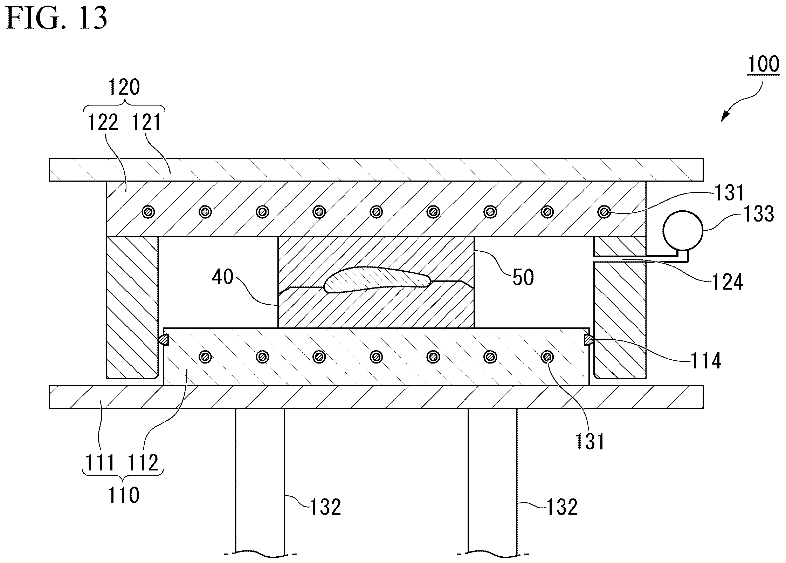

A modification example of the press machine may be configured so that, as shown in FIG. 13, the lower wall member 113 is omitted, and the lower hot plate 112 and the upper wall member 123 are engaged with each other through the vacuum sealing ring 114.

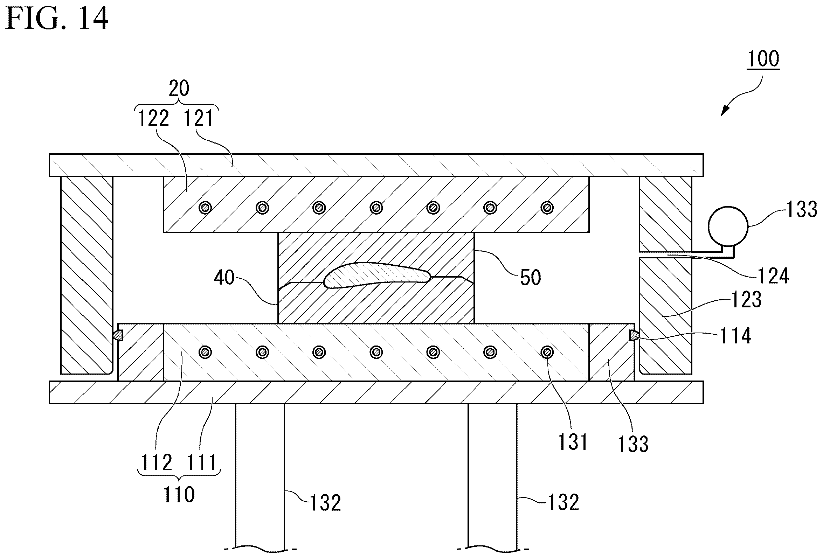

In another modification example of the press machine, as shown in FIG. 14, the lower wall member 113 and the upper wall member 123 engaged with each other through the vacuum sealing ring may be fixed to the upper surface of the lower substrate 111 and the lower surface of the upper substrate 121.

The configuration of the press machine in which a closed space that can be depressurized is formed between the lower hot plate and the upper hot plate is not limited to the above-described examples.

FIGS. 12 to 14 show a portable metal mold having no intermediate plate and formed only of a lower mold (lowermost plate 40) and an upper mold (uppermost plate 50), but the portable metal mold can be replaced with a portable metal mold having an intermediate plate.

4. Summary of Embodiments

[Embodiment 1] A manufacturing method for a honeycomb sandwich structural body includes:

(i) charging a metal mold for primary molding with a honeycomb core and at least two first prepregs;

(ii) pressurizing and heating the charged metal mold for primary molding by a press machine to obtain a primary molded product having a honeycomb sandwich structure in which the honeycomb core is sandwiched between two first CFRP layers;

(iii) charging a metal mold for secondary molding with the primary molded product and at least two second prepregs; and

(iv) pressurizing and heating the charged metal mold for secondary molding by the press machine to obtain a secondary molded product having a honeycomb sandwich structure in which the honeycomb core is sandwiched between the two first CFRP layers and a second CFRP layer is laminated on each of the two first CFRP layers.

[Embodiment 2] The manufacturing method for a honeycomb sandwich structural body according to Embodiment 1, in which at least one of the at least two first prepregs is disposed on each of both surfaces of a honeycomb surface of the honeycomb core.

[Embodiment 3] The manufacturing method according to Embodiment 2, in which the number of the first prepregs disposed on each of both surfaces of the honeycomb surface of the honeycomb core is 1 or more and 5 or less.

[Embodiment 4] The manufacturing method according to Embodiment 2, in which the number of the first prepregs disposed on each of both surfaces of the honeycomb surface of the honeycomb core is 5 or more and 30 or less.

[Embodiment 5] The manufacturing method according to any one of Embodiments 1 to 4, in which a portion in which the number of the first prepregs is partially large is included.

[Embodiment 6] The manufacturing method according to any one of Embodiments 1 to 5, in which the honeycomb core is pressurized by the press machine to obtain a desired shape.

[Embodiment 7] The manufacturing method according to any one of Embodiments 1 to 6, in which the metal mold for secondary molding is a portable metal mold.

[Embodiment 8] The manufacturing method according to Embodiment 7, in which a material of the portable metal mold is an aluminum alloy.

[Embodiment 9] The manufacturing method according to Embodiment 7 or 8, in which a temperature of the metal mold for secondary molding is 40°C or lower when the metal mold for secondary molding is charged.

[Embodiment 10] The manufacturing method according to Embodiment 9, in which the metal mold for secondary molding is charged in a room at a temperature of 17°C to 28°C.

[Embodiment 11] The manufacturing method according to any one of Embodiments 7 to 10, in which the metal mold for primary molding is a portable metal mold.

[Embodiment 12] The manufacturing method according to Embodiment 11, in which a material of the portable metal mold is an aluminum alloy.

[Embodiment 13] The manufacturing method according to Embodiment 11 or 12, in which a temperature of the metal mold for primary molding is 40°C or lower when the metal mold for primary molding is charged.

[Embodiment 14] The manufacturing method according to Embodiment 13, in which the metal mold for primary molding is charged in a room at a temperature of 17°C to 28°C.

[Embodiment 15] The manufacturing method according to any one of Embodiments 7 to 14, in which, when the charged metal mold for secondary molding is pressurized and heated by the press machine, a space around the metal mold for secondary molding is depressurized.

[Embodiment 16] The manufacturing method according to Embodiment 15, in which, when the charged metal mold for primary molding is pressurized and heated by the press machine, the space around the metal mold for secondary molding is depressurized.

[Embodiment 17] A honeycomb sandwich structural body, including: a honeycomb core sandwiched between CFRP layers, in which a value A is 0.01 or more and 0.10 or less, which is obtained by the following measurement method.

(Measurement Method for Value A)

An image of a cross section of a thickest part of the honeycomb sandwich structural body, cut in parallel with a thickness direction of the honeycomb core, is captured. Using image-processing software ImageJ, in a range of 20 mm in a direction perpendicular to the thickness direction of the honeycomb core in the image of the cross section, coordinates of an outer surface of the honeycomb sandwich structural body and coordinates of an innermost surface of the CFRP layer are acquired for each pixel. For each point of the coordinates of the outer surface, a distance between the coordinates of the outer surface and the coordinates of the innermost surface positioned in a normal direction to the outer surface at the coordinates of the outer surface is measured, and a standard deviation $D_A$ of the distances and an average value $D_B$ of the distances are calculated to obtain the value A using Expression (1).

$$A = D_A/D_B \dots \text{Expression (1)}$$

[Embodiment 18] The honeycomb sandwich structural body according to Embodiment 17, in which the CFRP layer includes a woven fabric layer that is a CFRP layer having a fiber-reinforced material of woven fabric, and a UD layer that is a CFRP layer having a unidirectional (UD) fiber-reinforced material.

[Embodiment 19] The honeycomb sandwich structural body according to Embodiment 18, in which the UD layer is disposed closer to an outer surface side of the honeycomb sandwich structural body than the woven fabric layer, and a value B is 0.01 or more and 0.10 or less, which is obtained by the following measurement method.

(Measurement Method for Value B)

An image of a cross section of a thickest part of the honeycomb sandwich structural body, cut in parallel with a thickness direction of the honeycomb core, is captured. Using image-processing software ImageJ, in a range of 20 mm in a direction perpendicular to the thickness direction of the honeycomb core in the image of the cross section, coordinates of an outer surface of the honeycomb sandwich structural body and coordinates of an interface between the woven fabric layer and the UD layer are acquired for each pixel. For each point of the coordinates of the outer surface, a distance between the coordinates of the outer surface and the coordinates of the interface positioned in a normal direction to the outer surface at the coordinates of the outer surface is measured, and a standard deviation $D_C$ of the distances and an average value $D_D$ of the distances are calculated to obtain the value B using Expression (2).

$$B = D_C/D_D \ ... \ \text{Expression (2)}$$

[Embodiment 20] A honeycomb sandwich structural body, including: a honeycomb core sandwiched between CFRP layers, in which the CFRP layer includes a woven fabric layer having a fiber-reinforced material of woven fabric, and a standard deviation of distances associated with woven fabric threads of each split layer is 30 $\mu$m or less, which is obtained by the following measurement method for the woven fabric layer.

(Measurement Method for Standard Deviation of Distances)

When one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B. In each of a split layer closer to a surface layer side and a split layer closer to a honeycomb core side than the thread A in the woven fabric layer, a shortest distance from the centroid position to an outer surface of the honeycomb sandwich structural body is obtained for each of five adjacent threads B to calculate a standard deviation of the distances.

[Embodiment 21] A honeycomb sandwich structural body, including: a honeycomb core sandwiched between CFRP layers, in which in at least one of the CFRP layers sandwiching the honeycomb core, a woven fabric layer having a fiber-reinforced material of woven fabric is disposed in a CFRP layer closest to a honeycomb core side, and a standard deviation of distances associated with woven fabric threads of each split layer is 30 $\mu$m or less, which is obtained by the following measurement method for the woven fabric layer.

(Measurement Method for Standard Deviation of Distances)

When one of orthogonal woven fabric threads of the woven fabric closest to the honeycomb core side is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B. In each of a split layer closer to a surface layer side and a split layer closer to the honeycomb core side than the thread A in the woven fabric layer closest to the honeycomb core side, a shortest distance from the centroid position to an outer surface of the honeycomb sandwich structural body is obtained for each of five adjacent threads B to calculate a standard deviation of the distances.

[Embodiment 22] A honeycomb sandwich structural body, including: a honeycomb core sandwiched between CFRP layers, in which the CFRP layer includes a woven fabric layer having a fiber-reinforced material of woven fabric, and a standard deviation of angles associated with woven fabric threads of the woven fabric layer is 1.5 degrees or less, which is obtained by the following measurement method.

(Measurement Method for Standard Deviation of Angles)

When one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B. For each of ten adjacent threads B in the woven fabric layer, an angle between a long axis direction in which the cross section of the thread B is approximated to an ellipse and a reference line that is parallel to a tangent to an outer surface at a closest point to the thread B on an outer surface curve of the honeycomb sandwich structural body and passes through a centroid of the thread B is obtained to calculate a standard deviation of the angles.

5. Experimental Results

Results of experiments conducted by the present inventors and others will be shown below.

(Experimental Example 1)

A honeycomb core made of an aluminum alloy and eight woven fabric prepregs were prepared.
A metal mold for primary molding was charged with the honeycomb core and first prepregs that were woven fabric prepregs, one of which was disposed above the honeycomb core, the other being disposed below the honeycomb core.
By pressurizing and heating using a press machine, the first prepregs were cured to obtain a primary molded product.
Next, in a metal mold for secondary molding, the primary molded product and second prepregs that were woven fabric prepregs, three of which were disposed above the primary molded product, the other three being disposed below the primary molded product, were charged and disposed.
By pressurizing and heating using the press machine, the second prepregs were cured to obtain a honeycomb sandwich structural body.

(Experimental Example 2)

A honeycomb core made of an aluminum alloy, and eight woven fabric prepregs were prepared.
A metal mold for secondary molding was charged with the honeycomb core and the woven fabric prepregs, four of which were disposed above the honeycomb core, the other four being disposed below the honeycomb core.
By pressurizing and heating using a press machine, the woven fabric prepregs were cured to obtain a honeycomb sandwich structural body.
Regarding the woven fabric threads of each woven fabric layer of the honeycomb sandwich structural bodies obtained in Experimental Examples 1 and 2, a standard deviation of shortest distances from a centroid position of the thread B to an outer surface of the honeycomb sandwich structural body and a standard deviation of angles between a long axis direction in which a cross section of the thread B was approximated to an ellipse and a reference line was obtained by the above-described methods, and the results are shown in Tables 1 and 2. 1A to 4B in Table 1 indicate split layers (layers A) on the surface layer side and split layers (layers B) on the honeycomb core side in each of the four woven fabric layers. 1 to 4 in Table 2 indicate the four woven fabric layers.
In addition, FIGS. 15 and 16 show views of a binarized cross section of the woven fabric layer when the standard deviation of shortest distances from a centroid position of the thread B to an outer surface of the honeycomb sandwich structural body and the standard deviation of angles between a long axis direction in which a cross section of the thread B was approximated to an ellipse and a reference line was obtained in Experimental Examples 1 and 2.

[Table 1]

|  | Standard Deviation of Distances | |
|  | μm | |
| Layer | Example 1 | Example 2 |
| 1A (surface layer side) | 10.0 | 10.6 |
| 1B | 16.1 | 4.8 |
| 2A | 15.3 | 12.7 |
| 2B | 8.6 | 20.3 |
| 3A | 9.5 | 31.8 |
| 3B | 15.6 | 25.7 |
| 4A | 9.1 | 45.0 |

(continued)

|  | Standard Deviation of Distances | |
| --- | --- | --- |
|  | μm | |
| 4B (honeycomb core side) | 9.6 | 50.5 |

[Table 2]

|  | Standard Deviation of Angles | |
| --- | --- | --- |
|  | Degrees | |
| Layer | Example 1 | Example 2 |
| 1 (surface layer side) | 0.24 | 0.31 |
| 2 | 0.24 | 0.83 |
| 3 | 0.30 | 1.97 |
| 4 (honeycomb core side) | 0.86 | 2.30 |

(Experimental Example 3)

A honeycomb core made of an aluminum alloy, four woven fabric prepregs, and two UD prepregs were prepared.

A metal mold for primary molding was charged with the honeycomb core and first prepregs that were UD prepregs, one of which was disposed above the honeycomb core, the other being disposed below the honeycomb core.

By pressurizing and heating using a press machine, the first prepregs were cured to obtain a primary molded product.

Next, in a metal mold for secondary molding, the primary molded product and second prepregs that were woven fabric prepregs, two of which were disposed above the primary molded product, the other two being disposed below the primary molded product, were charged and disposed.

By pressurizing and heating using the press machine, the second prepregs were cured to obtain a honeycomb sandwich structural body.

(Experimental Example 4)

A honeycomb core made of an aluminum alloy, forty-six UD prepregs, and six woven fabric prepregs were prepared.

A metal mold for primary molding was charged with the honeycomb core and first prepregs in which twenty-one UD prepregs were disposed above the honeycomb core, the other twenty-one being disposed below the honeycomb core, and two woven fabric prepregs were disposed above the honeycomb core, the other two being disposed below the honeycomb core, in this order.

By pressurizing and heating using a press machine, the first prepregs were cured to obtain a primary molded product.

Next, a metal mold for secondary molding was charged with the primary molded product and second prepregs in which two UD prepregs were disposed above the primary molded product, the other two being disposed below the primary molded product, and one woven fabric prepreg was disposed above the primary molded product, the other being disposed below the primary molded product, in this order.

By pressurizing and heating using the press machine, the second prepreg was cured to obtain a honeycomb sandwich structural body.

(Experimental Example 5)

A honeycomb core made of an aluminum alloy, four woven fabric prepregs, and two UD prepregs were prepared.

In a metal mold for molding, the honeycomb core was disposed and one UD prepreg was disposed above the honeycomb core, the other being disposed below the honeycomb core, and two woven fabric prepregs were disposed above the honeycomb core, the other two being disposed below the honeycomb core were disposed.

By pressurizing and heating using a press machine, the prepregs were cured to obtain a honeycomb sandwich structural body.

Regarding the honeycomb sandwich structural bodies obtained in Experimental Examples 3 to 5, a value A obtained by dividing a standard deviation $D_A$ of distances between an outer surface of the honeycomb sandwich structural body and an innermost surface of the CFRP layer by an average value $D_B$ of the distances was obtained by the above-described method, and the results are shown in Table 3. In addition, regarding the honeycomb sandwich structural bodies obtained in Experimental Examples 3 to 5, a value B obtained by dividing a standard deviation $D_C$ of distances from an outer surface of the honeycomb sandwich structural body to an interface between the woven fabric layer and the UD layer by an average value $D_D$ of the distances was obtained by the above-described method, and the results are also shown in Table 3.

[Table 3]

|  | Example 3 | Example 4 | Example 5 |
|---|---|---|---|
| Molding Method | Two-Stage Molding | Two-Stage Molding | One-Stage Molding |
| Standard Deviation $D_A$ ($\mu$m) of Distances Between Outer Surface of Honeycomb Sandwich Structural Body and Innermost Surface of CFRP Layer | 18.1 | 287.4 | 71.2 |
| Average Value $D_B$ ($\mu$m) of Distances Between Outer Surface of Honeycomb Sandwich Structural Body and Innermost Surface of CFRP Layer | 523.0 | 4351.1 | 531.0 |
| Value A (= $D_A/D_B$) | 0.034 | 0.066 | 0.134 |
| Standard Deviation $D_C$ ($\mu$m) of Distances Between Outer Surface of Honeycomb Sandwich Structural Body and Interface Between Woven Fabric Layer and UD Layer | 11.1 | 25.9 | 65.7 |
| Average Value $D_D$ ($\mu$m) of Distances Between Outer Surface of Honeycomb Sandwich Structural Body and Interface Between Woven Fabric Layer and UD Layer | 382.8 | 1113.5 | 409.2 |
| Value B (= $D_C/D_D$) | 0.029 | 0.023 | 0.161 |

Although the present invention has been described above in accordance with specific embodiments, each embodiment is presented as an example and does not limit the scope of the present invention. Each of the embodiments described in the present specification can be variously modified to the extent that the effects of the invention are achieved, and can be combined with the features described in other embodiments to a practicable extent.

REFERENCE SIGNS LIST

1 Wing (honeycomb sandwich structural body)
2 Primary molded product
10 CFRP layer
11 First CFRP layer
12 Second CFRP layer
13 Honeycomb core
14 First prepreg
15 Second prepreg
16 Honeycomb core side
17 Outer surface of honeycomb sandwich structural body
18 Fiber bundle cross section (cross section of thread B)
20 Metal mold for primary molding
21 Lower mold
22 Upper mold
30 Metal mold for secondary molding
31 Lower mold
32 Upper mold
40 Lower mold (lowermost plate)

50 Upper mold (uppermost plate)
60 Intermediate plate
70 Molding cavity
100 Press machine
110 Lower plate portion
111 Lower substrate
112 Lower hot plate
113 Lower wall member
114 Vacuum sealing ring
120 Upper plate portion
121 Upper substrate
122 Upper hot plate
123 Upper wall member
131 Heater
132 Cylinder of pressurization mechanism
133 Vacuum pump
A Angle
B Long axis direction of fiber bundle
C Reference line

**Claims**

1.  A manufacturing method for a honeycomb sandwich structural body, the method comprising:

    (i) charging a metal mold for primary molding with a honeycomb core and at least two first prepregs;
    (ii) pressurizing and heating the charged metal mold for primary molding by a press machine to obtain a primary molded product having a honeycomb sandwich structure in which the honeycomb core is sandwiched between two first CFRP layers;
    (iii) charging a metal mold for secondary molding with the primary molded product and at least two second prepregs; and
    (iv) pressurizing and heating the charged metal mold for secondary molding by the press machine to obtain a secondary molded product having a honeycomb sandwich structure in which the honeycomb core is sandwiched between the two first CFRP layers and a second CFRP layer is laminated on each of the two first CFRP layers.

2.  The manufacturing method according to Claim 1,
    wherein at least one of the at least two first prepregs is disposed on each of both surfaces of a honeycomb surface of the honeycomb core.

3.  The manufacturing method according to Claim 2,
    wherein the number of the first prepregs disposed on each of both surfaces of the honeycomb surface of the honeycomb core is 1 or more and 5 or less.

4.  The manufacturing method according to Claim 2,
    wherein the number of the first prepregs disposed on each of both surfaces of the honeycomb surface of the honeycomb core is 5 or more and 30 or less.

5.  The manufacturing method according to any one of Claims 1 to 4,
    wherein a portion in which the number of the first prepregs is partially large is included.

6.  The manufacturing method according to any one of Claims 1 to 5,
    wherein the honeycomb core is pressurized by the press machine to obtain a desired shape.

7.  The manufacturing method according to any one of Claims 1 to 6,
    wherein the metal mold for secondary molding is a portable metal mold.

8.  The manufacturing method according to Claim 7,
    wherein a material of the portable metal mold is an aluminum alloy.

9. The manufacturing method according to Claim 7 or 8,
wherein a temperature of the metal mold for secondary molding is 40°C or lower when the metal mold for secondary molding is charged.

10. The manufacturing method according to Claim 9,
wherein the metal mold for secondary molding is charged in a room at a temperature of 17°C to 28°C.

11. The manufacturing method according to any one of Claims 7 to 10,
wherein the metal mold for primary molding is a portable metal mold.

12. The manufacturing method according to Claim 11,
wherein a material of the portable metal mold is an aluminum alloy.

13. The manufacturing method according to Claim 11 or 12,
wherein a temperature of the metal mold for primary molding is 40°C or lower when the metal mold for primary molding is charged.

14. The manufacturing method according to Claim 13,
wherein the metal mold for primary molding is charged in a room at a temperature of 17°C to 28°C.

15. The manufacturing method according to any one of Claims 7 to 14,
wherein, when the charged metal mold for secondary molding is pressurized and heated by the press machine, a space around the metal mold for secondary molding is depressurized.

16. The manufacturing method according to Claim 15,
wherein, when the charged metal mold for primary molding is pressurized and heated by the press machine, the space around the metal mold for secondary molding is depressurized.

17. A honeycomb sandwich structural body, comprising:

a honeycomb core sandwiched between CFRP layers,
wherein a value A is 0.01 or more and 0.10 or less, which is obtained by the following measurement method:

(Measurement Method for Value A)
an image of a cross section of a thickest part of the honeycomb sandwich structural body, cut in parallel with a thickness direction of the honeycomb core, is captured; using image-processing software ImageJ, in a range of 20 mm in a direction perpendicular to the thickness direction of the honeycomb core in the image of the cross section, coordinates of an outer surface of the honeycomb sandwich structural body and coordinates of an innermost surface of the CFRP layer are acquired for each pixel; and for each point of the coordinates of the outer surface, a distance between the coordinates of the outer surface and the coordinates of the innermost surface positioned in a normal direction to the outer surface at the coordinates of the outer surface is measured, and a standard deviation $D_A$ of the distances and an average value $D_B$ of the distances are calculated to obtain the value A using Expression (1),

$$A = D_A/D_B \text{ ... Expression (1)}.$$

18. The honeycomb sandwich structural body according to Claim 17,
wherein the CFRP layer includes a woven fabric layer that is a CFRP layer having a fiber-reinforced material of woven fabric, and a UD layer that is a CFRP layer having a unidirectional (UD) fiber-reinforced material.

19. The honeycomb sandwich structural body according to Claim 18,
wherein the UD layer is disposed closer to an outer surface side of the honeycomb sandwich structural body than the woven fabric layer, and a value B is 0.01 or more and 0.10 or less, which is obtained by the following measurement method:

(Measurement Method for Value B)
an image of a cross section of a thickest part of the honeycomb sandwich structural body, cut in parallel with a thickness direction of the honeycomb core, is captured; using image-processing software ImageJ, in a range of 20 mm in a direction perpendicular to the thickness direction of the honeycomb core in the image of the cross section, coordinates of an outer surface of the honeycomb sandwich structural body and coordinates of an interface between the woven fabric layer and the UD layer are acquired for each pixel; and for each point of the coordinates of the outer surface, a distance between the coordinates of the outer surface and the coordinates of the interface positioned in a normal direction to the outer surface at the coordinates of the outer surface is measured, and a standard deviation $D_C$ of the distances and an average value $D_D$ of the distances are calculated to obtain the value B using Expression (2),

$$B = D_C/D_D \text{ ... Expression (2)}.$$

20. A honeycomb sandwich structural body, comprising:

a honeycomb core sandwiched between CFRP layers,
wherein the CFRP layer includes a woven fabric layer having a fiber-reinforced material of woven fabric, and a standard deviation of distances associated with woven fabric threads of each split layer is 30 $\mu$m or less, which is obtained by the following measurement method for the woven fabric layer:

(Measurement Method for Standard Deviation of Distances)
when one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B; and in each of a split layer closer to a surface layer side and a split layer closer to a honeycomb core side than the thread A in the woven fabric layer, a shortest distance from the centroid position to an outer surface of the honeycomb sandwich structural body is obtained for each of five adjacent threads B to calculate a standard deviation of the distances.

21. A honeycomb sandwich structural body, comprising:

a honeycomb core sandwiched between CFRP layers,
wherein in at least one of the CFRP layers sandwiching the honeycomb core, a woven fabric layer having a fiber-reinforced material of woven fabric is disposed in a CFRP layer closest to a honeycomb core side, and a standard deviation of distances associated with woven fabric threads of each split layer is 30 $\mu$m or less, which is obtained by the following measurement method for the woven fabric layer:

(Measurement Method for Standard Deviation of Distances)
when one of orthogonal woven fabric threads of the woven fabric closest to the honeycomb core side is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B; and in each of a split layer closer to a surface layer side and a split layer closer to the honeycomb core side than the thread A in the woven fabric layer closest to the honeycomb core side, a shortest distance from the centroid position to an outer surface of the honeycomb sandwich structural body is obtained for each of five adjacent threads B to calculate a standard deviation of the distances.

22. A honeycomb sandwich structural body, comprising:

a honeycomb core sandwiched between CFRP layers,
wherein the CFRP layer includes a woven fabric layer having a fiber-reinforced material of woven fabric, and a standard deviation of angles associated with woven fabric threads of the woven fabric layer is 1.5 degrees or less, which is obtained by the following measurement method:

(Measurement Method for Standard Deviation of Angles)
when one of orthogonal woven fabric threads of the woven fabric is referred to as a thread A and the other is referred to as a thread B, an image of a cross section of the CFRP layer cut in a direction orthogonal to the thread B is captured, and the cross section is binarized using image-processing software ImageJ to calculate a centroid position of a cross section of each thread B; and for each of ten adjacent threads B in the woven fabric layer, an angle between a long axis direction in which the cross section of the thread B is approximated to an ellipse and a reference line that is parallel to a tangent to an outer surface at a closest point to the thread B on an outer surface curve of the honeycomb sandwich structural body and passes through a centroid of the thread B is obtained to calculate a standard deviation of the angles.

FIG. 1

# FIG. 2

(A)

(B)

FIG. 3

# FIG. 4

FIG. 5

EP 4 578 619 A1

FIG. 6

EP 4 578 619 A1

# FIG. 7

FIG. 8

FIG. 9

EP 4 578 619 A1

FIG. 10

111
112 } 110
113
114

FIG. 11

EP 4 578 619 A1

FIG. 12

FIG. 13

EP 4 578 619 A1

# FIG. 14

EP 4 578 619 A1

FIG. 15

FIG. 16

FIG. 17

FIG. 18

SURFACE LAYER SIDE

LAYER 1

LAYER 2

LAYER 3

LAYER 4

THREAD B

THREAD A

HONEYCOMB CORE SIDE

## INTERNATIONAL SEARCH REPORT

| International application No. |
|---|
| **PCT/JP2023/030582** |

**A. CLASSIFICATION OF SUBJECT MATTER**

*B29C 43/14*(2006.01)i; *B29C 43/20*(2006.01)i; *B29C 70/06*(2006.01)i; *B29C 70/34*(2006.01)i; *B29C 70/42*(2006.01)i; *B32B 3/12*(2006.01)i; *B32B 37/02*(2006.01)i; *B32B 37/18*(2006.01)i
FI: B29C43/14; B29C43/20; B29C70/34; B29C70/06; B29C70/42; B32B3/12 Z; B32B37/02; B32B37/18

According to International Patent Classification (IPC) or to both national classification and IPC

**B. FIELDS SEARCHED**

Minimum documentation searched (classification system followed by classification symbols)

B29C43/14; B29C43/20; B29C70/06; B29C70/34; B29C70/42; B32B3/12; B32B37/02; B32B37/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-112849 A (CHALLENGE CO LTD) 05 August 2021 (2021-08-05) claims, paragraphs [0021]-[0048], [0065], fig. 2 | 17-22 |
| A | claims, paragraphs [0049]-[0064] | 1-16 |
| A | US 2008/0233344 A1 (GROB, Burkhart) 25 September 2008 (2008-09-25) claims, paragraphs [0023], [0033]-[0034], [0043]-[0050] | 1-22 |
| A | US 2001/0046600 A1 (HEXCEL CORPORATION) 29 November 2001 (2001-11-29) paragraphs [0054], [0087], fig. 2A, 2C | 1-22 |
| A | JP 2008-230235 A (TORAY IND INC) 02 October 2008 (2008-10-02) paragraphs [0090], [0098]-[0104], [0157]-[0161] | 1-22 |
| A | JP 2010-524779 A (HANKUK FIBER GLASS CO., LTD.) 22 July 2010 (2010-07-22) paragraphs [0023]-[0028], fig. 3 | 17-22 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/030582**

| Patent document cited in search report | | | Publication date (day/month/year) | Patent family member(s) | | | Publication date (day/month/year) |
|---|---|---|---|---|---|---|---|
| JP | 2021-112849 | A | 05 August 2021 | (Family: none) | | | |
| US | 2008/0233344 | A1 | 25 September 2008 | EP | 1815969 | A1 | |
| | | | | DE | 102006044842 | A | |
| | | | | CA | 2577216 | A1 | |
| US | 2001/0046600 | A1 | 29 November 2001 | US | 6261675 | B1 | |
| | | | | US | 2002/0009935 | A1 | |
| | | | | EP | 1046666 | A1 | |
| | | | | EP | 1205507 | A2 | |
| | | | | EP | 1205508 | A2 | |
| | | | | EP | 1205509 | A2 | |
| JP | 2008-230235 | A | 02 October 2008 | (Family: none) | | | |
| JP | 2010-524779 | A | 22 July 2010 | US | 2010/0140975 | A1 | |
| | | | | paragraphs [0028]-[0032], fig. 3 | | | |
| | | | | WO | 2009/096676 | A2 | |
| | | | | EP | 2143622 | A2 | |
| | | | | KR | 10-2009-0084042 | A | |
| | | | | CN | 101678865 | A | |
| | | | | MY | 162851 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022133293 A
- JP 2023070926 A

- JP 2021112849 A